# EUROPEAN PATENT APPLICATION

(11) **EP 3 415 462 A1**
(43) Date of publication of application: **19.12.2018**
(21) Application number: 17176105.9
(22) Date of filing: 14.06.2017
(51) Int. Cl.: B67D 1/08, F25D 31/00, B67D 3/00

(54) **DISPOSABLE TUBE UNIT ADAPTED FOR USE IN A HEAT EXCHANGER FOR A BEVERAGE DISPENSING APPARATUS, HEAT EXCHANGER FOR A BEVERAGE DISPENSING APPARATUS, BEVERAGE DISPENSING APPARATUS AND METHOD OF DISPENSING A BEVERAGE**

(71) Applicant: The Refined Industry Co. Ltd., Shatin, N.T. (HK)
(72) Inventor: WONG, Siu Fai Simon, Shatin, N.T. (HK)
(74) Representative: Jaekel, Robert Sebastian

(57) **Abstract**

A disposable tube unit (140) adapted for use in a heat exchanger (130) for a beverage dispensing apparatus (100) is presented. The tube unit (140) is configured to guide a beverage through a tank (150) of the heat exchanger (130). The tank (150) is configured to contain a cooling medium. The tube unit (140) comprises a fluid inlet (142) fluidically connectable to a reservoir section (110) of the beverage dispensing apparatus (100) for connecting to a beverage reservoir (190). Furthermore, the tube unit (140) comprises a fluid outlet (144) fluidically connectable to a faucet (120) of the beverage dispensing apparatus (100). The tube unit (140) also comprises at least one tube (146) extending from the fluid inlet (142) to the fluid outlet (144). The tube unit (140) is configured to be mounted in the tank (150) and removed from the tank (150) in non-destructive manner. In a mounted state of the tube unit (140), the fluid inlet (142) is fluidically connected to the reservoir section (110) and the fluid outlet (144) is fluidically connected to the faucet (120).

## Description

The present invention relates to a disposable tube unit adapted for use in a heat exchanger for a beverage dispensing apparatus, a heat exchanger for a beverage dispensing apparatus, a beverage dispensing apparatus, a method of dispensing a beverage, a controller and a use of a disposable tube unit for guiding a beverage through the tank of the heat exchanger.

A beverage dispensing system may take the beverage from a coupler connected to a beverage container, via a combination of metal or plastic pipes and, if the beverage is not cool already, through a cooling device to a faucet where the beverage is dispensed. A conventional beverage dispensing system may use fixed tubing, which is in need of regular cleaning.

Against this background, the present invention provides a disposable tube unit adapted for use in a heat exchanger for a beverage dispensing apparatus, a heat exchanger for a beverage dispensing apparatus, a beverage dispensing apparatus, a method of dispensing a beverage, a controller and a use of a disposable tube unit for guiding a beverage through the tank of the heat exchanger in accordance with the main claims. Advantageous embodiments are defined in the subordinate claims and the following description.

According to embodiments of the present invention, a disposable tube unit adapted for use in the heat exchanger of a beverage dispensing and cooling apparatus, for example a beer dispensing and cooling apparatus, may be provided. What may be provided according to embodiments of the present invention, for example, is a beverage water heat exchanger comprising a disposable tube group or tube unit made of plastic material. The tube unit may comprise, for example, at least one tube going from a coupler for coupling with a beverage reservoir or container all the way through the heat exchanger and to a faucet for dispensing the average. To clean the tube system, it is sufficient to replace the tube unit or cartridge. What may also be provided, for example, is an integrated beverage dispensing system with cooling, so that no separate cooling device is required, and equipped with a compressor for conveying the beverage to be dispensed, for example from a double-layer container or another type of reservoir.

It is economical to exchange the tube unit so that no cleaning thereof is necessary as cleaning by qualified personnel can be expensive. Formed as a disposable tubing cartridge, for example, the tube unit may be exchanged when necessary so that no cleaning is necessary, which may save time, labour and costs. Thus, a simple to use and integrated system for storing, cooling and dispensing of beer and other beverages served cold may be provided, for example, with disposable tubing for conveying the beverage from storage, through cooling and to dispensing. Hence, the quality of the beverage dispensed can be ensured without cleaning the tube or tubes but by simply replacing a used tube unit with a new one. In particular, conventional flushing of the tubing can be avoided for sanitizing the system.

A disposable tube unit adapted for use in a heat exchanger for a beverage dispensing apparatus, wherein the tube unit is configured to guide a beverage through a tank of the heat exchanger, wherein the tank is configured to contain a cooling medium, comprises:
a fluid inlet fluidically connectable to a reservoir section of the beverage dispensing apparatus for connecting to a beverage reservoir;
a fluid outlet fluidically connectable to a faucet of the beverage dispensing apparatus; and
at least one tube extending from the fluid inlet to the fluid outlet,
wherein the tube unit is configured to be mounted in the tank and removed from the tank in non-destructive manner, wherein, in a mounted state of the tube unit, the fluid inlet is fluidically connected to the reservoir section and the fluid outlet is fluidically connected to the faucet. A major advantage of the tube unit of the present invention is that it does not require cleaning as it is disposable. Part of the adaptation of the disposable tube unit for use in a heat exchanger consists in its design in such manner that it can be removed from the tank in a non-desctructive manner and a new disposable tube unit inserted in a non-destructive manner into the heat exchanger. The old, exchanged tube unit may be disposed afterwards. Other details concerning the the construction of the tube unit are indicated further below.

The beverage dispensing apparatus may be configured to dispense the beverage, wherein the apparatus is configured to cool the beverage in the process of dispensing. The beverage may be beer or another beverage served chilled, for example. The fluid inlet and the fluid outlet may represent ends or end sections of the at least one tube. The at least one tube may be wound up in a coil-like way. The fluid inlet may be formed to be fluidically coupled to the reservoir section. The fluid outlet may be formed to be fluidically coupled to the faucet. The reservoir section may be formed to connect to the beverage reservoir. Optionally, the reservoir section may be formed to accommodate the beverage reservoir. Optionally, the reservoir section may be formed to secure the beverage reservoir inside or outside the beverage dispensing apparatus. The reservoir section may comprise a coupler fluidically connectable to a beverage outlet of the beverage reservoir.

According to an embodiment, the at least one tube may be formed at least in part of at least one plastic material, in particular of a copolymer, especially ethylene vinyl alcohol. Ethylene vinyl alcohol is in the following abbreviated as EVOH. In particular, the at least one tube may be formed of multiple layers of at least two different plastic materials. Herein, an ethylene vinyl alcohol layer may be sandwiched between other plastic material layers, for example. Tubing of such material offers the advantage of being oxygen resistant and at least partially gas tight so that little carbon dioxide is lost from the beverage and/or little oxygen accumulates in the beverage. Thus, the beverage can be preserved, with its freshness maintained. The tube may consist of one or of several layers of material, wherein at least one of the layers consists of or comprises a material, which has the physical and chemical characteristics as mentioned above. Possible material composition and structure of the layers is described in detail further below.

According to another embodiment, the tube unit may be formed as a cartridge. The cartridge may be formed to mechanically stabilise the at least one tube while allowing contact between the at least one tube and the cooling medium. Such an embodiment may the advantage that the tube unit can be replaced easily, safely and quickly.

A heat exchanger for a beverage dispensing apparatus comprises:
the aforementioned tube unit;
the tank containing the cooling medium; and
a refrigerating unit for refrigerating the cooling medium in the tank.

Thus, an embodiment of the aforementioned tube unit may be employed in the heat exchanger in order to guide, carry or conduct the beverage. The tube unit may be removable from the tank for replacement. By means of such a heat exchanger, any pre-cooling of the beverage may be omitted. It may be possible to simply feed in the beverage at room temperature, and the dispensed beverage may be obtained at serving temperature. The heat exchanger may, for example, be configured for continuous operation with minimum or no down time and/or for direct cooling without pre-refrigeration, thus simplifying the dispensing process and saving time.

According to an embodiment, the refrigerating unit may at least comprise an evaporator, a compressor and a condenser. The evaporator may be arranged in the tank. The refrigerating unit may be configured to circulate a refrigerant in a cycle through the evaporator, compressor and condenser. When the tube unit is arranged in the tank, the tube unit may be at least partially surrounded by the evaporator. In other words, the evaporator may be have the shape of a coil, with space for accommodating the tube unit surrounded by the windings of the coil. Such an embodiment offers the advantage of uninterrupted, continuous cooling and dispensing action, wherein a situation in which an engine in a cooling system may get hot and need to stop to cool down can be avoided.

According to another embodiment, the heat exchanger may comprise a pump for circulating the cooling medium in the tank. The pump may be arranged in or adjacent to the tank. Such an embodiment offers the advantage of enhanced heat transfer from the beverage to the cooling medium and from the cooling medium to the refrigerating unit, particularly the evaporator of the refrigerating unit.

A beverage dispensing apparatus comprises:
the aforementioned heat exchanger;
the reservoir section for connecting to a beverage reservoir;
the faucet;
conveying means for conveying the beverage from the reservoir section through the disposable tube unit of the heat exchanger to the faucet; and
a subsequently described controller, wherein the controller is connectable or connected to the heat exchanger, to the conveying means and additionally or alternatively to the faucet.

Thus, an embodiment of the aforementioned heat exchanger and an embodiment of a controller as subsequently described may be employed in the beverage dispensing apparatus for effecting heat transfer and for controlling the operation of the apparatus, respectively.

According to an embodiment, the beverage dispensing apparatus may comprise coupling means for coupling the disposable tube unit to the reservoir section and to the faucet of the beverage dispensing apparatus. The coupling means may be arranged arranged on the tube unit, on the reservoir section and additionally or alternatively on the faucet. The coupling means may comprise clamps or other mechanical fasteners or fixing devices. Such an embodiment offers the advantage that the disposable tube unit can be securely and easily connected to the reservoir section and faucet.

According to another embodiment, the beverage dispensing apparatus may comprise a housing. The housing may at least partially be formed of metal, in particular stainless steel. Such an embodiment offers the advantage that the apparatus may be made more structurally robust and easy to clean.

According to another embodiment, the beverage dispensing apparatus may comprise wheels for moving the beverage dispensing apparatus. Thus, the beverage dispensing apparatus may be designed as a mobile system or integrated mobile system. The beverage dispensing apparatus may easily be moved or transported to wear electricity is available.

According to another embodiment, the conveying means may comprise an air compressor. Additionally or alternatively the conveying means may comprise a gas container. Thus, the beverage dispensing apparatus can be used with a reservoir formed as a bottle or keg, for example, with beverage to be dispensed by using compressed air or by means of carbon dioxide. The apparatus only needs to be provided with a suitable conveying means for each alternative.

A method of dispensing a beverage, wherein the method is executable in connection with the aforementioned beverage dispensing apparatus, comprises the steps of:
driving the conveying means to convey beverage from the reservoir section through the disposable tube unit of the heat exchanger to the faucet depending on actuation of the faucet; and
controlling the heat exchanger to cool beverage conveyed through the disposable tube unit of the heat exchanger.

The method may be executed by the controller of the beverage dispensing apparatus beverage dispensing system. By executing the method, foam height and flow rate of the dispensed beverage can be adjusted and controlled without pre-refrigeration of the beverage.

What is also presented is a controller configured to execute steps of the aforementioned method. The controller may physically be arranged at least partially in the aforementioned beverage dispensing apparatus.

A controller may be a technical device processing electrical signals, for example sensor signals, and outputting control signals depending thereon. The controller may comprise one or more suitable interfaces, which may be configured as hardware and/or software. If configured as hardware, the interfaces may, for example, be part of an integrated circuit implementing functions of the controller. The interfaces may also be discrete integrated circuits or at least partly consist of discrete components. If configured as software, the interfaces may be software modules on a microcontroller along with other software modules, for example.

What is also advantageous is a computer program product with program code which may be stored on a machine-readable carrier, such as a semiconductor memory, a harddrive memory or an optical memory, and is used for executing the aforementioned method, when the program is executed on a computer or a controller.

Use of an aforementioned tube unit for guiding a beverage through the tank of the aforementioned heat for the aforementioned beverage dispensing apparatus also is presented herein.

The invention will be explained in greater detail by way of example using the appended drawings, in which:
Fig. 1 shows a beverage dispensing apparatus, according to an embodiment of the present invention;
Fig. 2 shows a flowchart of a method of dispensing a beverage, according to an embodiment of the present invention. (A) General method of dispensing a beverage; (B) flow chart of the general method shown in (A) with substeps of steps 210 and 220 indicated in detail. Step 225 is drawn to the right from the other steps to visualize its affiliation to general step 220, wherein the other steps 211-214 and 216-218 are affiliated with general step 210.
Fig. 3 shows a beverage dispensing apparatus, according to an embodiment of the present invention with the beverage reservoir 190 arranged outside the housing 102; and
Fig. 4 shows an exemplary tube of a tube unit of the present invention in (A) cross section (B) length section and (C) a magnification of a quadrant of a cross section of the tube.

In the following description of preferred embodiments of the present invention, the same or similar reference numerals shall be used for the elements depicted in the various figures and acting in a similar way, wherein repeated description of these elements shall be omitted.

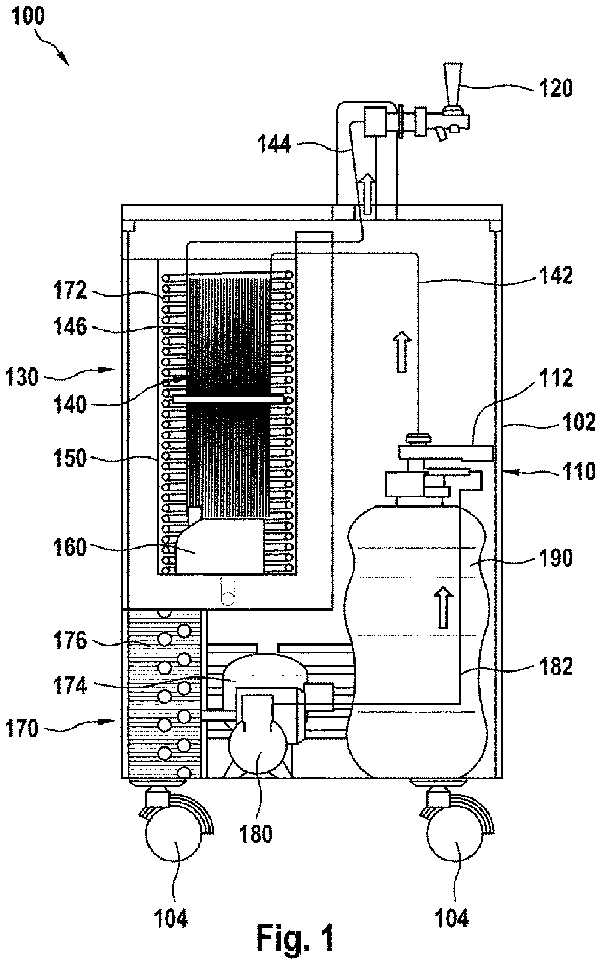

Fig. 1 shows a beverage dispensing apparatus 100, according to an embodiment of the present invention. In particular, the beverage dispensing apparatus 100 is configured to dispense a chilled beverage or to cool or refrigerate and dispense a beverage. According to the embodiment shown in Fig. 1, for example, the beverage is beer. According to another embodiment, the beverage may be another kind of beverage to be served chilled. In Fig. 1, the beverage dispensing apparatus 100 is shown in a fully assembled or mounted state and in a partially sectional view.

The beverage dispensing apparatus 100 comprises a heat exchanger 130, a reservoir section 110 for accommodating a beverage reservoir 190, a faucet 120, conveying means 180 and a controller. The controller is connected to the heat exchanger 130, to the conveying means 180 and/or to the faucet 120. The controller itself is not depicted in Fig. 1 due to lack of space and for the sake of clarity in the illustration.

Herein, the heat exchanger 130 is designed as a vapour compression refrigeration system. The heat exchanger 130 comprises a tube unit 140, a tank 150 for containing a cooling medium or heat exchange liquid, for example water or another coolant, and a refrigerating unit 170 for refrigerating the cooling medium in the tank 150. Thus, the heat exchanger 130 is configured to enable heat transfer from the beverage to be dispensed to the cooling medium in the tank 150 and the refrigerating unit 170.

The disposable tube unit 140 is configured to guide the beverage through the tank 150 of the heat exchanger 130. The tube unit 140 comprises a fluid inlet 142, a fluid outlet 144 and at least one tube 146. According to the embodiment shown in Fig. 1, the tube unit 140 comprises a single continuous tube 146. The tube 146 extends from the fluid inlet 142 to the fluid outlet 144 of the tube unit 140. In other words, in the embodiment described here, the fluid inlet 142 and the fluid outlet 144 are formed as ends or end sections of the tube 146. Herein, the tube 146 is wound up in a coil-like manner. The fluid inlet 142 is fluidically connected to a reservoir section 110 of the beverage dispensing apparatus 100. The fluid outlet 144 is fluidically connected to a faucet 120 of the beverage dispensing apparatus 100. The tube unit 140 is mounted or arranged at least partially inside the tank 150. More specifically, the tube 146 is arranged within the tank, with the fluid inlet 142 and the fluid outlet 144 protruding from the tank 150. The disposable tube unit 140 is configured to be removed from the tank 150 in non-destructive manner.

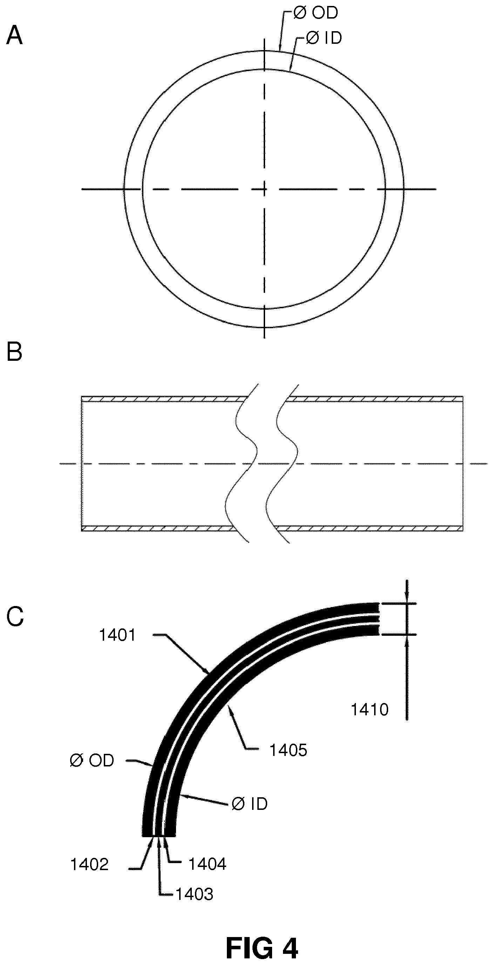

In the embodiment shown in Fig. 1, at least the tube 146 of the disposable tube unit 140 is formed of plastic. In particular, the tube 146 is at least in part formed of a material providing water resistance to the tube, *i.e.* making the tube watertight, such as a copolymer, for example ethylene vinyl alcohol (EVOH). Also, the tube unit 140 is formed or designed as a cartridge removable from the beverage dispensing apparatus 100. The beverage dispensing apparatus 100 also comprises coupling means for coupling the tube unit 140 to the reservoir section 110 and to the faucet 120. The coupling means is arranged on the tube unit 140, the reservoir section 110 and/or the faucet 120. The coupling means itself is not depicted in Fig. 1 due to lack of space and for the sake of clarity in the illustration. A more detailed description of a tube preferably used and suitable in the tube unit of the present invention, its construction, materials of which the tube consists and the properties of the tube may be found further below, where Fig. 4 is described in detail.

The refrigerating unit 170 at least comprises an evaporator 172, a compressor 174 and a condenser 176. The evaporator 172 is arranged in the tank 150. Thus, the evaporator 172 is arranged to cool the cooling medium in the tank 150. Herein, the evaporator 172 is formed as a coiled pipe surrounding a space for accommodating the tube 146. The refrigerating unit 170 is configured to circulate a refrigerant in a cycle through the evaporator 172, compressor 174 and condenser 176. The refrigerating unit 170 may also comprise a throttling or expansion device, which is not depicted in Fig. 1 due to lack of space and for the sake of clarity in the illustration, between the condenser 176 and the evaporator 172.

Furthermore, the heat exchanger 130 comprises a pump 160 for circulating the cooling medium in the tank 150. In the embodiment shown in Fig. 1, the pump 160 is arranged in the tank 150. According to another embodiment, the pump 160 may be arranged adjacent to the tank 150.

The reservoir section 110 of the beverage dispensing apparatus 100 is formed to accommodate a beverage reservoir 190. Thus, the beverage reservoir 190 is arranged in the reservoir section 110. According to the embodiment shown in Fig. 1, the reservoir section 110 comprises a coupler 112 for establishing a fluidic connection between the reservoir section 110 and the beverage reservoir 190.

The beverage dispensing apparatus 100 also comprises conveying means 180 for conveying the beverage from the reservoir section 110 through the tube unit 140 of the heat exchanger 130 to the faucet 120. In the embodiment shown in Fig. 1, the conveying means 180 comprises an air compressor fluidically connected to the reservoir section, more specifically to the coupler 112, via an air pipe 182. Thus, the conveying means 180 is configured to feed compressed air into the beverage reservoir 190 coupled to the coupler 112. According to another embodiment, the conveying means 180 may comprise a gas container, for example for containing carbon dioxide.

Furthermore, according to the embodiment shown in Fig. 1, the beverage dispensing apparatus 100 comprises a housing 102 and wheels 104. The housing 102 or machine shell is at least partially formed of metal material. For example, the housing 102 is made of stainless steel. The wheels 104 are arranged at the bottom of the housing 102 for moving the beverage dispensing apparatus 100.

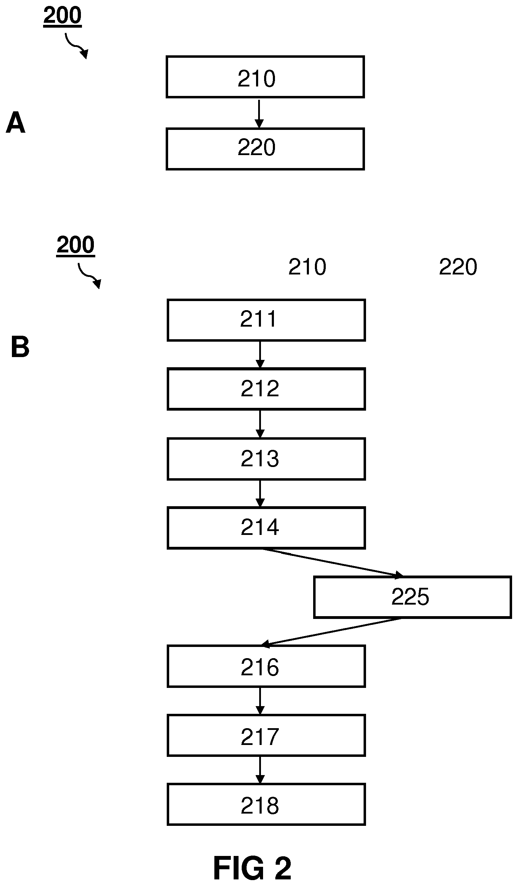

Fig. 2A shows a general flowchart of a method 200 of dispensing a beverage, according to an embodiment of the present invention. The method 200 is executable in connection with the beverage dispensing apparatus shown in Fig. 1 or a similar beverage dispensing apparatus. In particular, the method 200 is executable using the controller of the beverage dispensing apparatus shown in Fig. 1 or a similar one.

The method 200 comprises a step 210 of driving the conveying means in order to convey beverage from the reservoir section through the tube unit of the heat exchanger to the faucet. The step 210 of driving is performed depending on actuation of the faucet of the beverage dispensing apparatus.

The method 200 further comprises a step 220 of controlling the heat exchanger in order to cool beverage conveyed through the tube unit of the heat exchanger. The step 220 of controlling may be performed continuously, at least while beverage is being conveyed through the heat exchanger. The step 220 of controlling may also be started before execution of the step 210 driving.

The method and its two steps may be further detailed by listing potential substeps as shown in Fig. 2B. In the first step 211 room temperature water is filled into the cooling water tank 150. In this step, water should be preferably filled up to the water warning line. In a second step 212, the cooling tube system-EVOH 140 is settled into the cooling water tank 150. In a third step 213 the one end of the tube of the cooling tube system-EVOH 140 is connected with the beer needle from a beer keg, and another end of the cooling tube system-EVOH 140 is connected with the beer tap 120. In a fourth step 214, the apparatus is connected with power (e.g., 220V/50Hz) for starting the machine. In a fifth step 225 water is cooled in the cooling water tank 150 to an optimal temperature within a preferably short time period. Preferably, cooling the tank 150 takes place within less than about one hour, more preferably within or below about 40 minutes. During this step the water temperature will be controlled by the controller/control box 1106 automatically. In a sixth step 216, the air pressure switch is opened to supply air pressure into the beer keg. In the seventh step 217, the air pressure compresses the inner beer keg to push the beer coming out to cooling tube system-EVOH for cooling the beer via the cooling water in the tank 150. In the eigth step 218, the beer tap is opened for dispensing the beer. As may be seen from the above description, steps 211-214 and 216-218 may be seen as substeps of the general step 210 of driving the conveying means, and step 225 may be seen as a substep, or more detailed step of the general step 220 of controlling the heat exchanger in order to cool beverage.

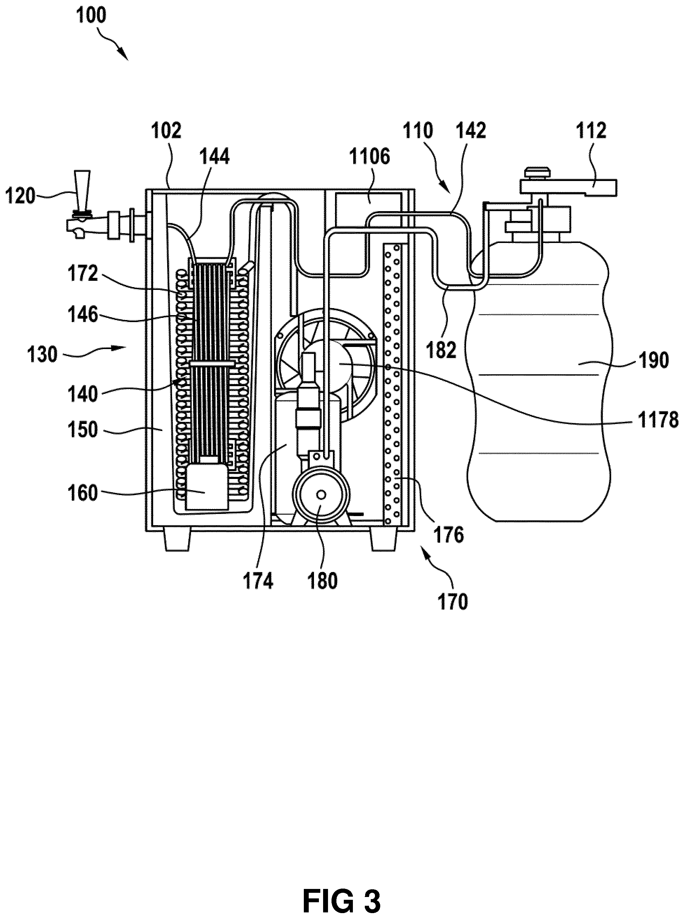

Fig. 3 shows a beverage dispensing apparatus 100, according to an embodiment of the present invention. The beverage dispensing apparatus 100 shown here corresponds to the beverage dispensing apparatus as shown in Fig. 1 except that the beverage reservoir 190, bottle, or keg of the beverage is arranged outside the housing 102 of the beverage dispensing apparatus 100. In other words, the beverage reservoir 190 can be stored separately outside the beverage dispensing apparatus 100. Furthermore, the controller 1106 or control box 1106 and the cooling fan 1178 of the refrigerating unit 170 also are depicted in this drawing of the beverage dispensing apparatus 100.

Fig. 4 shows an exemplary tube of a tube unit of the present invention in (A) cross section, (B) length section and (C) a magnification of a quadrant of a cross section of the tube; 1401 - outer layer, preferably consinsting of or comprising PE, more preferably of LDPE; 1402 - first tie layer, preferably consinsting of or comprising PE, more preferably of LDPE; 1403 - middle layer, preferably consisting of or comprising EVOH; 1404 - second tie layer, preferably consinsting of or comprising PE, more preferably of LDPE; 1405 - inner layer, preferably preferably consinsting of or comprising PE, more preferably of LDPE; OD - outer diameter; ID - inner diameter; 1410 - complete thickness of the tube wall.

With reference to the figures previously described, at least one embodiment of the present invention shall be summarised in other words and/or set forth briefly in the following.

What is provided is a beverage dispensing apparatus 100, which may also be referred to as a beer dispensing and cooling apparatus 100, according to one embodiment.

The heat exchanger 130 is air cooled and its evaporator 172 is configured to facilitate heat transfer between the refrigerant and the cooling medium, for example water. The refrigerating unit 170 absorbs the heat in the liquid cooling medium and lowers the cooling medium temperature to create cooled liquid, with heat being redirected to the condenser 176 by means of the compressor 174 and further transferred to the outside environment by means of a cooling fan arranged next to the condenser 176. The heat exchanger 130 further comprises a pump 160 or motor configured to circulate the cooling medium or water in the tank 150 or water tank. According to one embodiment, the heat exchanger 130 is connected directly to the faucet 120 or tap and to the beverage bottle connector or coupler 112 of the reservoir section 110.

The housing 102 or metal enclosure is made of stainless steel, for example stainless steel 304, with a brush finish to make the housing 102 more stain resistant and easier to clean. For example, the housing 102, and thus the beverage dispensing apparatus 100, may have dimensions of about 540x540x820 mm or similar dimensions.

In the refrigerating process, the condenser 176 transfers heat and allows the refrigerant to be cooled. When the compressed overheated steam of refrigerant enters the condenser 176 from the compressor 174, heat absorbed in the cooling process, including heat absorbed from the evaporator 172, compressor 174 and cooling tube 146, is transferred to the surrounding air, and the compressed overheated steam of refrigerant is re-condensed into liquid form.

The evaporator 172 is a heat exchange device relying on the evaporation (in this case, boiling) of the refrigerant to absorb heat from the liquid to be cooled, *i.e.* the cooling medium. Its function in the refrigerating unit 170 is to absorb heat from the cooling medium. To ensure stability and sustainability of the evaporation process, the compressor 174 constantly draws away evaporated refrigerant, in order to maintain a defined level or range of vapour pressure. The refrigerant enters the evaporator 172 and vaporises in the evaporator 172 to absorb heat, in order to achieve cooling or refrigeration.

Many industrial refrigeration systems use R22 or R12 as the refrigerant. The refrigerant is the working medium in a cooling system. It is used to carry heat; it absorbs and releases heat in phase changes.

Thus, the cooling medium or cooled liquid remains in the cooling water tank 150, at a temperature that is set to ensure that the beverage will be dispensed at optimal temperature.

The tube 146 of the disposable tube unit 140 is preferably formed to be gas penetration resistant, in particular resistant to penetration of gases from the group consisting of oxygene and carbon dioxide. This is important to prevent oxygene from entry into the liquids, e.g., beverages transported in the tube, and to preserve the freshness of the beverages thereby. Furthermore, if the beverages contain gases, such as carbon dioxidy, exit of the gas from the beverage is prevented thereby. Preferably, the tube 146 is also tight is respect of liquids, e.g., beverages such as water, soft drinks and beer.

The tube may consist of one layer, wherein the layer has the above-indicated characteristics (gas penetration resistance and preferably also impearmeability is respect of liquids) and consists of or comprises a material with the above-mentioned characteristics, such as EVOH.

Preferably, the tube 146 is multi-layered, wherein at least one layer consists of a material, which has the above-indicated characteristics (gas penetration resistance and preferably also impearmeability is respect of liquids). A material with this characteristics and suitable in such a tube is EVOH. The layer consisting of or comprising EVOH is preferably sandwiched between additional layers, which are used, for example, to bind (tie layer(s)) the different layers together and/or strengthen the tube. This gas penetration resistant layer is referenced in the following as the impermeability layer, or, if it is laying in the middle of the other layers, as the middle layer.

Exemplary materials which are comprised in the tie (*i.e.,* adhesive, or bonding) layers, or of which these layers consist of are materials, which may be used to bind unlike materials such as polyethylene (PE) resins and copolymers, EVA, EMA, polypropylene, polyamide (nylon), ethylene vinyl alcohol copolymers (EVOH), ionomer and other sealants, polyethylene terephthalate (PET) resins and copolymers, styrenic polymers, metal, and paperboard. Mostly preferred materials for the tie layers are PE based materials such as linear low-density polyethylene (LDPE).

Additional layers, such as an outer and inner layer, sandwiching the tie layers and the impermeability/middle layer preferably used in the tube 146 used in the tube unit of the present invention preferably consist of, or at least comprise materials strenght-ning the tube, i,e, increasing the tube's one or more characteristics selected from the group consisting of flexibility, elasticity, tensile strength, tear strength, impact resistance, puncture resistance, environmental stress cracking resistance. Preferably, these layers consist of or at least comprise polyethylene (PE), more preferably LDPE.

The disposable tube unit 140 is formed as an EVOH tube group of the heat exchanger 130, according to one embodiment.

In contrast to a traditional system using stainless steel tubing in need of regular cleaning to maintain the required sanitary condition of the tubing, food grade EVOH tubing of the disposable tube unit 140 is used in embodiments of the present invention instead of stainless stain tubing. A user may replace the tube unit 140 or EVOH tube group as required, at predetermined intervals or from time to time and dispose of the removed tube group.

For example, the tubing of the tube unit 140 is preferably about ID 5.2 X OD 6.2 mm, and the thickness is about 0.500 mm, wherein the dimension of the tubing enables the beverage to cool down quickly within the cooling water tank 150 and achieve a flow rate of liquid of 2 to 2.5 L/min.

The wall of the tubing of the tube unit 140 may, for example, consist of several layers. In one embodiment, as also exemplarily described above and shown in Fig. 4, the wall consists of five layers: a middle layer consisting of a material preventing liquids and preferably also gases from escaping the tube at other places than the inlet(s) and outlet(s) of the tube, *i.e.* along the length of the tube between the inlet(s) and the outlet(s). Accordingly, the five layers may consist of: LDPE (low density polyethylene), Tie, EVOH, Tie and LDPE (in the order of the sequence of the layers).

EVOH tubing has low oxygen transmission rates. According to tests, the rate may be 0.14cm³/kg/d. It may prevent or inhibit leakage of carbon dioxide from the liquid beverage and ensure freshness of the beverage.

An inner diameter of the EVOH tubing or the tube 146 of the tube unit 140 is selected according to the required beverage dispensing rate. Given a dispensing rate of 2 to 2.5 L/min and a pressure of the compressed air, the inner diameter of the tube 146 may, for example, be about 5.20 mm, but can be adapted in accordance with a different dispensing rate as needed.

The configuration of the tube unit 140 can be adapted to a desired beverage serving temperature and foam height.

Exemplary operation of the beverage dispensing apparatus 100 shall be explained briefly and in other words in the following. At first, for example, water at room or ambient temperature is filled into the cooling water tank 150 to a water warning line. Then the cooling tube unit 140 is settled into the cooling water tank 150. Then the fluid inlet 142 is connected with the coupler 112, *e.g.,* a beer needle of a beer keg, and the fluid outlet 144 is connected with the faucet 120 or tap. Thereafter, the beverage dispensing apparatus 100 is connected with power (220V/50Hz) for starting the beverage dispensing apparatus 100. Thereupon, the water in the tank 150 is cooled to 0.5-1.5 degrees Celsius within 40 minutes, for example. In this example the water temperature may automatically be controlled between 0.5-1.5 degrees Celsius by the controller 1106. Opening an air pressure switch will supply the pressurized air or medium into the beverage reservoir 190. The pressure will compress an inner beer keg to push the beer out to the tube unit 140 for cooling the beer via the cooling water in tank 150. Finally, the faucet 120 may be opened for dispensing the beverage, e.g., beer.

It is to be noted that pre-cooling can be advantageously omitted in the beverage dispensing apparatus 100. The beverage reservoir 190 does not need to be pre-cooled before attaching to the beverage dispensing apparatus 100, and the beverage dispensed will be at the desired temperature by going through the cooling process within the beverage dispensing apparatus 100.

The embodiments described and depicted in the figures are chosen to be merely exemplary. Different embodiments may be combined with each other completely or with respect to distinct features. Also, one embodiment may be supplemented by features of another embodiment. Furthermore, the method steps presented here may be carried out repeatedly and in an order different from the one described.

In case an embodiment includes a first feature and a second feature linked by "and/or", this means that the embodiment comprises, in one embodiment, both the first feature and the second feature and, in a further embodiment, comprises only one of the first feature and the second feature.

## Claims

1. Disposable tube unit (140) adapted for use in a heat exchanger (130) for a beverage dispensing apparatus (100), wherein the tube unit (140) is configured to guide a beverage through a tank (150) of the heat exchanger (130), wherein the tank (150) is configured to contain a cooling medium, wherein the tube unit (140) comprises:
- a fluid inlet (142) fluidically connectable to a reservoir section (110) of the beverage dispensing apparatus (100) for connecting to a beverage reservoir (190);
- a fluid outlet (144) fluidically connectable to a faucet (120) of the beverage dispensing apparatus (100); and
- at least one tube (146) extending from the fluid inlet (142) to the fluid outlet (144),
wherein the tube unit (140) is configured to be mounted in the tank (150) and removed from the tank (150) in non-destructive manner, wherein, in a mounted state of the tube unit (140), the fluid inlet (142) is fluidically connected to the reservoir section (110) and the fluid outlet (144) is fluidically connected to the faucet (120).

2. Tube unit (140) according to claim 1, wherein the at least one tube (146) is formed of at least one plastic material, in particular a copolymer, especially ethylene vinyl alcohol.

3. Tube unit (140) according to one of the preceding claims, wherein the tube unit (140) is formed as a cartridge.

4. Heat exchanger (130) for a beverage dispensing apparatus (100), wherein the heat exchanger (130) comprises:
- the disposable tube unit (140) according to one of the preceding claims;
- the tank (150) for containing the cooling medium; and
- a refrigerating unit (170) for refrigerating the cooling medium in the tank.

5. Heat exchanger (130) according to claim 4, wherein the refrigerating unit (170) at least comprises an evaporator (172), a compressor (174) and a condenser (176), wherein the evaporator (172) is arranged in the tank (150), wherein the refrigerating unit (170) is configured to circulate a refrigerant in a cycle through the evaporator (172), compressor (174) and condenser (176).

6. Heat exchanger (130) according to one of claims 4 to 5, comprisinig a pump (160) for circulating the cooling medium in the tank (150), wherein the pump (160) is arranged in or adjacent to the tank (150).

7. Beverage dispensing apparatus (100), comprising:
- the heat exchanger (130) according to one of claims 4 to 6;
- the reservoir section (110) for connecting to a beverage reservoir (190);
- the faucet (120);
- conveying means (180) for conveying the beverage from the reservoir section (110) through the disposable tube unit (140) of the heat exchanger (130) to the faucet (120); and
- a controller (1106) according to claim 13, wherein the controller (1106) is connectable or connected to the heat exchanger (130), the conveying means (180) and/or the faucet (120).

8. Beverage dispensing apparatus (100) according to claim 7, comprising coupling means for coupling the disposable tube unit (140) to the reservoir section (110) and the faucet (120) of the beverage dispensing apparatus (100), wherein the coupling means is arranged on the disposable tube unit (140), the reservoir section (110) and/or the faucet (120).

9. Beverage dispensing apparatus (100) according to one of claims 7 to 8, comprising a housing (102), wherein the housing (102) is at least partially formed of metal, in particular stainless steel.

10. Beverage dispensing apparatus (100) according to one of claims 7 to 9, comprising wheels (104) for moving the beverage dispensing apparatus (100).

11. Beverage dispensing apparatus (100) according to one of claims 7 to 10, wherein the conveying means (180) comprises an air compressor and/or a gas container.

12. Method (200) of dispensing a beverage, wherein the method (200) is executable in connection with the beverage dispensing apparatus (100) according to one of claims 7 to 11, wherein the method (200) comprises the steps of:
- driving (210) the conveying means (180) to convey beverage from the reservoir section (110) through the disposable tube unit (140) of the heat exchanger (130) to the faucet (120) depending on actuation of the faucet (120); and
- controlling (220) the heat exchanger (130) to cool beverage conveyed through the disposable tube unit (140) of the heat exchanger (130).

13. Controller (1106) configured to execute steps of the method (200) according to claim 12.

14. Use of a disposable tube unit (140) according to one of claims 1 to 3 for guiding a beverage through the tank of the heat exchanger (130) according to one of claims 4 to 6 for a beverage dispensing apparatus (100) according to one of claims 7 to 11.
